# EUROPEAN PATENT SPECIFICATION

(11) **EP 1 375 505 B1**
(45) Date of publication and mention of the grant of the patent: **13.09.2006**
(21) Application number: 02702723.4
(22) Date of filing: 04.03.2002
(51) Int. Cl.: C07F 9/655, C07F 9/53, C07F 9/6553, C07F 9/32

(54) **OPTICALLY ACTIVE ALKENYLPHOSPHINIC ACID ESTER AND PROCESS FOR PRODUCING THE SAME**
OPTISCH AKTIVE ALKENYLPHOSPHINSÄUREESTER UND VERFAHREN ZU DEREN HERSTELLUNG
ESTER D'ACIDE ALCENYLPHOSPHINIQUE ET SON PROCEDE D'OBTENTION

(30) Priority: 08.03.2001 JP 2001064362
(43) Date of publication of application: 02.01.2004
(73) Proprietor: Japan Science and Technology Agency, Kawaguchi-shi Saitama (JP); National Institute of Advanced Industrial Science and Technology, Tokyo 100-8921 (JP)
(72) Inventor: HAN, Li-Biao, Tsukuba-shi, Ibaraki 305-0035 (JP); ZHAO, Chang-Qiu, Tsukuba-shi, Ibaraki 305-0051 (JP); TANAKA, Masato, Tsukuba-shi, Ibaraki 305-0074 (JP)
(74) Representative: Cresswell, Thomas Anthony
(86) International application number: PCT/JP2002/001939
(87) International publication number: WO 2002/072592

(56) References cited:
- EP-A- 1 369 422
- EP-A1- 0 085 391
- EP-A1- 0 794 190
- DD-A- 123 478
- DATABASE CROSSFIRE BEILSTEIN [Online] Beilstein Institut zur Förderung der Chemischen Wissenschaften, Frankfurt am Main, DE; Database accession no. BRN 2734549; BRN 2733182; BRN 2727202; BRN 2729139 XP002268279 & ANISIMOV ET AL.: BULL. ACAD. SCI. USSR DIV. CHEM. SCI., 1962, page 410
- DATABASE CROSSFIRE BEILSTEIN [Online] Beilstein Institut zur Förderung der Chemischen Wissenschaften, Frankfurt am Main, DE; Database accession no. BRN 2733943; BRN 2732850 XP002268280 & RASUMOW ET AL.: J. GEN. CHEM. USSR, vol. 35, 1965, page 2038
- DATABASE CROSSFIRE BEILSTEIN [Online] Beilstein Institut zur Förderung der Chemischen Wissenschaften, Frankfurt am Main, DE; Database accession no. BRN 2752587; BRN2743436; BRN 2729815 XP002268281 & FEDOROVA ET AL.: PROBL. ORG. SINT, vol. 1965, 1965, pages 258-263,
- DATABASE CROSSFIRE BEILSTEIN [Online] Beilstein Institut zur Förderung der Chemischen Wissenschaften, Frankfurt am Main, DE; Database accession no. BRN 2737163 XP002268282 & TIMOKHIN, B. V. ET AL.: J. GEN. CHEM. USSR, vol. 41, 1971, pages 2658-2664,
- DATABASE CROSSFIRE BEILSTEIN [Online] Beilstein Institut zur Förderung der Chemischen Wissenschaften, Frankfurt am Main, DE; Database accession no. BRN 911971; BRN 909605; BRN 910614; BRN 912456 XP002268283 & GAREEV, R. D. ET AL.: J. GEN. CHEM. USSR, vol. 47, 1977, pages 2431-2440,
- DATABASE CROSSFIRE BEILSTEIN [Online] Beilstein Institut zur Förderung der Chemischen Wissenschaften, Frankfurt am Main, DE; Database accession no. BRN 2105316 XP002268284 & GLOYNA ET AL.: J. PRAKT. CHEM., vol. 319, 1977, pages 451-455,
- DATABASE CROSSFIRE BEILSTEIN [Online] Beilstein Institut zur Förderung der Chemischen Wissenschaften, Frankfurt am Main, DE; Database accession no. BRN 2722085 XP002268286 & GEFTER ET AL.: J. GEN. CHEM. USSR, vol. 31, 1961, page 883
- DATABASE CROSSFIRE BEILSTEIN [Online] Beilstein Institut zur Förderung der Chemischen Wissenschaften, Frankfurt am Main, DE; Database accession no. BRN 2722100 XP002268287 & GEFTER ET AL.: J. GEN. CHEM. USSR, vol. 34, 1964, page 88
- DATABASE CROSSFIRE BEILSTEIN [Online] Beilstein Institut zur Förderung der Chemischen Wissenschaften, Frankfurt am Main, DE; Database accession no. BRN 2806352 XP002268288 & KABACHNIK ET AL.: J. GEN. CHEM. USSR, vol. 32, 1962, pages 3288-3296,
- DATABASE CROSSFIRE BEILSTEIN [Online] Beilstein Institut zur Förderung der Chemischen Wissenschaften, Frankfurt am Main, DE; Database accession no. BRN 2936881 XP002268289 & BORISOVA, E.E. ET AL.: DOKL. CHEM. , vol. 226, 1976, pages 142-145,
- HAN L-B ET AL: "RHODIUM-CATALYZED REGIO- AND STEREOSELECTIVE ADDITION OF DIPHENYLPHOSPHINE OXIDE TO ALKYNES" JOURNAL OF ORGANIC CHEMISTRY, AMERICAN CHEMICAL SOCIETY. EASTON, US, vol. 66, no. 17, 24 August 2001 (2001-08-24), pages 5929-5932, XP001086926 ISSN: 0022-3263
- DATABASE CROSSFIRE BEILSTEIN [Online] Beilstein Institut zur Förderung der Chemischen Wissenschaften, Frankfurt am Main, DE; Database accession no. BRN 2937634 XP002268290 & GAREEV ET AL.: J. GEN. CHEM. USSR, vol. 47, 1977, page 650
- XU Y ET AL: "PALLADIUM-CATALYSED SYNTHESIS OF ALKYL ALKENYMETHYL- AND ALKENYLPHENYLPHOSPHINATES" SYNTHESIS, GEORG THIEME VERLAG. STUTTGART, DE, vol. 86, no. 3, March 1986 (1986-03), pages 240-242, XP002006949 ISSN: 0039-7881
- CAREY J.V. ET AL.: 'Preparation of enantiomerically pure phosphine oxides by nucleophilic displacement chemistry using oxazaphospholidines' J. CHEM. SOC., PERKIN TRANS. I, 1993, pages 831 - 839, XP000651139
- MOLINARI G. AND BANFI S.: 'Synthesis of optically active beta-halogeno-phosphinates via asymmetric selection' SYNTH. COMMUN. vol. 12, no. 10, 1982, pages 749 - 753, XP002953116
- KOIZUMI TORU ET AL.: 'Kogaku kassei N-(ethoxy(phenylthiomethyl)phosphinyl)-L-pr olineethyl-ester o mochiiru kakushu kogaku kassei phosphonyl kagobutsu no gosei' JOURNAL OF THE CHEMICAL SOCIETY OF JAPAN no. 7, 1987, pages 1199 - 1206, XP002953117

## Description

### Technical Field

The present invention relates to a process for producing an optically active alkenylphosphinic acid ester compound having chirality on a phosphorus atom.

With regard to optically active alkenylphosphinic acid esters, their fundamental skeleton has been found in nature and it has been known that they themselves show a physiological activity when made to act with enzyme or the like. Further, the compounds are very useful. For instance, they can easily be converted to optically active tertiary phosphines, which are widely used as auxiliary ligands for various kinds of asymmetric catalytic reactions. Furthermore, the compounds easily react with nucleophilic agents and radical species and are able to be used for Horner-Wittig reaction. Thus, they are a group of compounds highly useful in view of synthesis of fine chemicals as well.

### Background of the Invention

General synthetic method for optically active alkenylphosphinic acid esters has not been known yet. With regard to a method for their synthesis involving the formation of the carbon-phosphorus bond, one can consider a method where the corresponding alkenyl halide compound is subjected to the substitution reaction with hydrogen phosphinic acid ester. However, in that method, it is necessary to add a base for trapping the hydrogen halide which is simultaneously produced as a result of the reaction, and hence large quantities of hydrogen halide salt are produced as well. In addition, alkenyl halide compounds, which are the starting materials, are not always easily available on the basis of industry and, further, they are usually toxic. Therefore, this method is not industrially advantageous at all. There is another method where racemic alkenylphosphinic acid esters are subjected to optical resolution but the process involved in the optical resolution is generally troublesome whereby it is not an industrially advantageous manufacturing method as well.

A method of producing a carbon phosphorus bond is mentioned in Angew.Chem.1998, 110, 98-101 which involves the reaction of an alkyne and diphenylphosphine oxide to produce a diphenylphosphine alkene. However, the compounds produced by this method have no optical activity.

### Disclosure of the Invention

An object of the present invention is to provide a process for producing an optically active alkenylphosphinic acid ester using an optically active hydrogen phosphinic acid ester which can be easily synthesized as a starting material.

### Best Mode for Carrying Out the Invention

The present inventors have carried out intensive studies for the addition reaction of easily available optically active hydrogen phosphinic acid esters with acetylene compounds and, as a result, they have found this addition reaction proceeds in the presence of a special catalyst giving novel optically active alkenylphosphinic acid esters in high yields and selectivities. On the basis of such a finding, the present invention has been achieved.

The present invention provides a process for the production of an optically active alkenylphosphinic acid ester compound represented by the formula [1]

R¹{CH=CR²[P (O) (OR³)Ar]}ₙ [1]

and/or the formula [2]

R¹{C[P(O) (OR³)Ar]=CHR²}ₙ [2]

(in the above formulae, R¹, R², R³ and Ar have the same meanings which will be defined below) where phosphorus atom in any of the configurations of R and S is predominantly contained, characterized in that, an acetylene compound represented by the formula [3]

R¹(C≡CR²)ₙ [3]

(in the formula, n is 1 or 2; R¹ and R² each when n is 1 and R² when n is 2 is hydrogen atom, an alkyl group, a cycloalkyl group, an aryl group, an aralkyl group, a heteroaryl group, a ferrocenyl group, an alkenyl group, an alkoxy group, an aryloxy group, a silyl group or a silyloxy group; and R¹ when n is 2 is an alkylene group, a cycloalkylene group, an arylene group, an aralkylene group, a heteroarylene group, a ferrocenylene group, an alkenylene group, a silylene group, an alkylenedioxy group, an arylenedioxy group or a silylenedioxy group) is made to react, in the presence of a catalyst containing a metal of group 9 or group 10 of the periodic table or, preferably, rhodium or palladium, with an optically active hydrogen phosphinic acid ester represented by the formula [4]

HP(O) (OR³)Ar [4]

(in the formula, R³ is an alkyl group, a cycloalkyl group, an aralkyl group or an aryl group; and Ar is an aryl group or a heteroaryl group) where phosphorus atom in any of the configurations of R and S is predominantly contained. In a preferred embodiment R³ is (-)-menthyl.

The acetylene compound used as a starting material in the process for production of the present invention is represented by the above formula [3] where R¹ and R² each when n is 1 and R² when n is 2 is hydrogen atom, an alkyl group, a cycloalkyl group, an aryl group, an aralkyl group, a heteroaryl group, a ferrocenyl group, an alkenyl group, an alkoxy group, an aryloxy group, a silyl group or a silyloxy group; and R¹ when n is 2 is an alkylene group, a cycloalkylene group, an arylene group, an aralkylene group, a heteroarylene group, a ferrocenylene group, an alkenylene group, a silylene group, an alkylenedioxy group, an arylenedioxy group or a silylenedioxy group.

With regard to an alkyl group when R¹ and/or R² are/is alkyl group(s) in the formulae [1], [2] and [3], there is exemplified a straight or branched alkyl group having 1 to 18 carbon (s) or, preferably, 1 to 10 carbon (s) and specific examples thereof are methyl group, ethyl group, n- or iso-propyl group, n-, iso-, sec- or tert-butyl group, n-, iso-, sec-, tert- or neo-pentyl group, n-hexyl group, n-heptyl group, n-octyl group, 1-methylheptyl group, n-nonyl group and n-decyl group.

With regard to a cycloalkyl group when they/it are/is cycloalkyl group(s), there is exemplified a cycloalkyl group having 5 to 18 carbons or, preferably, 5 to 12 carbons and specific examples thereof are cyclopentyl group, cyclohexyl group, cyclooctyl group and cyclododecyl group.

With regard to an aryl group when they/it are/is aryl group(s), there is exemplified an aryl group having 6 to 14 carbons or, preferably, 6 to 10 carbons and specific examples thereof are phenyl group and naphthyl group where their substituents (tolyl group, xylyl group, benzylphenyl group, etc.) are included as well.

With regard to an aralkyl group when they/it are/is aralkyl group(s), there is exemplified an aralkyl group having 7 to 13 carbons or, preferably, 7 to 9 carbons and specific examples thereof are benzyl group, phenethyl group, phenylbenzyl group and naphthylmethyl group.

With regard to a heteroaryl group when they/it are/is heteroaryl group(s), there are exemplified various kinds of heteroaromatic ring groups containing heteroatoms such as oxygen, nitrogen and sulfur and numbers of atoms contained therein are 4 to 12 or, preferably, 4 to 8. Specific examples thereof are thienyl group, furyl group, pyridyl group and pyrrolyl group.

With regard to an alkenyl group when they/ it are/is alkenyl group(s), there is exemplified an alkenyl group having 2 to 18 carbons or, preferably, 2 to 10 carbons and specific examples thereof are vinyl group, 3-butenyl group and cyclohexenyl group.

With regard to an alkoxy group when they/it are/is alkoxy group(s), there is exemplified an alkoxy group having 1 to 8 carbon (s) or, preferably, 1 to 4 carbon (s) and specific examples thereof are methoxy group, ethoxy group and butoxy group.

With regard to an aryloxy group when they/it are/is aryloxy group(s), there is exemplified an aryloxy group having 6 to 14 carbons or, preferably, 6 to 10 carbons and specific groups thereof are phenoxy group and naphthoxy group.

With regard to a silyl group when they/is are/is silyl group (s), that which is substituted, for example, with an alkyl group, an aryl group, an aralkyl group, an alkoxy group, etc. may be included as well. Specific examples thereof are trimethylsilyl group, triethylsilyl group, triphenylsilyl group, phenyldimethylsilyl group, trimethoxysilyl group and tert-butyldimethylsilyl group.

With regard to an alkylene group, a cycloalkylene group, an arylene group, an aralkylene group, a heteroarylene group, a ferrocenylene group, an alkenylene group, a silylene group, an alkylenedioxy group, an arylenedioxy group or a silylenedioxy group which is represented by R¹ when n is 2 in the formulae [1], [2] and [3], that is selected from a divalent residue where one hydrogen atom is removed from various R¹s exemplified in the case where n is 1 or a divalent residue where one hydrogen atom is substituted with one oxygen atom therein and specific examples thereof are methylene group, pentamethylene group, cyclohexylene group, phenylene group, naphthylene group, furandiyl group, ferrocenylene group, 2-butenediyl group, tetramethylenedioxy group, phenylenedioxy group and dimethylsilylene group.

Regardless of n, the groups R¹ and R² in the formulae [1], [2] and [3] may be substituted with a functional group, which is inactive to the reaction, such as methoxy group, methoxycarbonyl group, cyano group, dimethylamino group, diphenylphosphinyl group, fluoro group, chloro group and hydroxyl group.

Examples of the acetylene compound which is preferably used in the reaction of the present invention are unsubstituted acetylene, propyne, butyne, octyne, p-chlorophenylacetylene, trimethylsilylacetylene, ethynylthiophene, hexynonitrile, cyclohexenylacetylene, ethynylferrocene, 1,4-pentadiyne, 1,8-nonadiyne and diethynylbenzene although the present invention is not limited thereto.

The optically active hydrogen phosphinic acid ester which is used as a starting material in the production process according to the present invention predominantly contains phosphorus atom in any of stereochemical configurations of R and S configurations, and is represented by the formula [4], where R³ is menthyl and Ar is an aryl group or a heteroaryl group as mentioned already.

With regard to an aryl group or a heteroaryl group represented by Ar in the formulae [1], [2] and [4], there is exemplified an aryl group or a heteroaryl group having 4 to 16 carbons or, preferably, 4 to 12 carbons and specific examples thereof are thienyl group, furyl group, pyridyl group, pyrrolyl group, phenyl group and naphthyl group including substituents thereof (phenyl, tolyl, xylyl, benzylphenyl, etc.) as well.

With regard to the groups represented by R³ and Ar in the formulae [1], [2] and [4], they may be substituted with a functional group, which is inactive to the reaction, such as methoxy group, methoxycarbonyl group, cyano group, dimethylamino group, fluoro group, chloro group and hydroxyl group.

A specific example of an advantageous hydrogen phosphinic acid ester is menthyl phenylphosphinate which predominantly contain phosphorus atom in R or S configuration although this is non-limitative.

Ratio of the acetylene compound to the optically active hydrogen phosphinic acid ester used is usually preferred to be in 1:1 in terms of a molar ratio although the reaction is not disturbed even when the ratio is more or less than that.

In order to efficiently generate the reaction of the present invention, the use of a catalyst containing metal of group 9 or group 10 of the periodic table is preferred. In one embodiment, the metal of group 9 is rhodium. In a second embodiment, the metal of group 10 is palladium. The use of a complex catalyst containing rhodium or palladium is preferred. With regard to such a complex catalyst, that of various structures may be used and the preferred one is a complex of so-called low valence state and that where tertiary phosphine or tertiary phosphite is a ligand is particularly preferred. The use of a precursor which is easily converted to low valence state in-situ is a preferred embodiment as well.

In a preferred embodiment, the catalyst containing the metal of the group 9 or group 10 of the periodic table is a complex catalyst of low valence state.

In another preferred embodiment, the catalyst containing the metal of the group 9 or group 10 of the periodic table is a complex of low valence state where tertiary phosphine or tertiary phosphite is a ligands.

In a further preferred embodiment, the catalyst containing the metal of the group 9 or group 10 of the periodic table is a precursor complex which is easily able to be converted to a low valent complex in-situ.

In an additional preferred embodiment, the catalyst containing the metal of the group 9 or group 10 of the periodic table is a low valent complex in which ligand (s) is/are tertiary phosphine or/and tertiary phosphite which is/are formed in-situ by the joint use of the complex of the metal containing no tertiary phosphine or tertiary phosphite with tertiary phosphine or tertiary phosphite. Further preferred embodiments are a method where a complex containing no tertiary phosphine or tertiary phosphite is mixed with tertiary phosphine or phosphite in-situ and a low valent complex having tertiary phosphine or phosphite as a ligand is formed in-situ and is used and a method where the same or different tertiary phosphine or phosphite is further added to a low valent complex in which tertiary phosphine or phosphite is a ligand and the resulting species is used. With regard to the ligand which achieves an advantageous property in any of those methods, there are listed various kinds of tertiary phosphines and tertiary phosphites.

Examples of the ligand which is able to be advantageously used in the present invention are triphenylphosphine, diphenylmethylphosphine, phenyldimethylphosphine, 1,4-bis(diphenylphosphino)butane, 1,3-bis(diphenylphosphino)propane, 1,2-bis(diphenylphosphino)ethane, 1,1'-bis(diphenylphosphino)ferrocene, trimethyl phosphite and triphenyl phosphite.

With regard to the complex containing no tertiary phosphine or tertiary phosphite as a ligand which is used together therewith, there are exemplified acetylacetonatobis (ethylene) rhodium, chlorobis(ethylene)rhodium dimer, dicarbonyl(acetylacetonato)rhodium, hexarhodiumhexadecacarbonyl, chloro(1,5-cyclooctadiene)rhodium, chloro(norbornadiene)rhodium dimer, bis(dibenzylideneacetone)palladium and palladium acetate although they are non-limitative.

With regard to the phosphine or phosphite complex which is advantageously used, there are exemplified chlorocarbonylbis(triphenylphosphine)rhodium, hydridocarbonyltris(triphenylphosphine)rhodium, chlorotris(triphenylphosphine)rhodium, chlorocarbonylbis(trimethyl phosphite)rhodium, dimethylbis(triphenylphosphine)palladium, dimethylbis(diphenylmethylphosphine)palladium, dimethylbis(dimethylphenylphosphine)palladium, dimethylbis(trimethylphosphine)palladium, dimethylbis(triethylphophine)palladium, (ethylene)bis(triphenylphosphine)palladium, tetrakis(triphenylphosphine)palladium and dichlorobis(triphenylphosphine)palladium.

Besides those complexes, it is also possible to use metallic palladium or rhodium or a supported metal catalyst where palladium or rhodium is supported on activated carbon, silica, etc.

The amount of such a catalyst used may be the so-called catalytic amount and, usually, it is sufficient to use 20 mol % or less relative to the acetylene compound.

Although such a catalyst shows its activity even when it is used solely, improvement in the catalytic activity and improvement in selectivity of the product are noted when it is used together with a phosphinic acid additive. Such a phosphinic acid is represented, for example, by the formula [5].

HO-P (O) (R⁴) ₂ [5]

(in the formula, R⁴ is an alkyl group, a cycloalkyl group or an aryl group). In one embodiment, the process or the present invention is carried art in the presence of a phosphinic acid of formula [5].

With regard to the alkyl group when R⁴ in the formula [5] is an alkyl group, there may be exemplified an alkyl group having 1 to 6 carbon(s) or, preferably, 1 to 4 carbon(s) and specific examples thereof are methyl, ethyl, n- or iso-propyl group, n-, iso-; sec- or tert-butyl group, n-pentyl group and n-hexyl group.

With regard to the cycloalkyl group when it is a cycloalkyl group, there may be exemplified a cycloalkyl group having 3 to 12 carbons or, preferably, 5 to 6 carbons and specific examples thereof are cyclopentyl group and cyclohexyl group.

With regard to the aryl group when it is an aryl group, there may be exemplified an aryl group having 6 to 14 carbons or, preferably, 6 to 10 carbons and specific examples thereof are phenyl group and naphthyl group where substituent thereof (tolyl group, xylyl group, benzylphenyl group, etc.) may be included as well.

The alkyl group, cycloalkyl group or aryl group represented by R⁴ may be substituted with a functional group, which is inactive to the reaction, such as methoxy group, methoxycarbonyl group, cyano group, dimethylamino group, fluoro group, chloro group and hydroxyl group.

Specific examples of the phosphinic acid used in the present invention are diphenylphosphinic acid, dimethylphosphinic acid, phenyl(tert-butyl)phosphinic acid and bis(trifluoromethyl)phosphinic acid. Its amount of use relative to the optically active hydrogen phosphinic acid ester used is equimolar or less or, preferably, 0.1 to 10 mol %.

Although the reaction does not need a solvent, it may also be carried out in a solvent if necessary. With regard to the solvent, there may be used various ones such as hydrocarbons, halogenated hydrocarbons, ethers, ketones, nitriles and esters. Each of them may be used solely or two or more thereof may be used jointly as a mixture.

With regard to the reaction temperature, the reaction does not proceed at an advantageous rate when it is too low while, when it is too high, the catalyst decomposes. Therefore, generally, it is selected from a range of -20°C to 300°C and, preferably, it is conducted within a range of from room temperature to 150°C.

The catalyst used in the present reaction is sensitive to oxygen and it is preferred that the reaction is carried out in an atmosphere of inert gas such as nitrogen, argon and methane. Separation of the product from the reaction mixture can be easily achieved by means of chromatography, distillation or recrystallization or the like.

### Examples

The present invention will now be illustrated more specifically by way of the following Examples although the present invention is not limited to those Examples.

### Example 1

To 2 ml of toluene were added 1 mmol of menthyl (R)ₚ-phenylphosphinate (100% ee), 1 mmol of 1-octyne and RhCl(PPh₃)₃ (3 mol %) as a catalyst followed by subjecting to a reaction at 70°C for 5 hours in a nitrogen atmosphere. The reaction solution was concentrated and isolated and purified by liquid chromatography to give menthyl (R)ₚ-phenyl[(E)-1-octen-1-yl]phosphinate in 81% yield. Its optical purity was able to be easily determined by ³¹P nuclear magnetic resonance spectrometry and was 100% ee.

This compound is a novel substance which has not been mentioned in literatures and its spectral data are as follows. ¹H NMR (500MHz, CDCl₃) δ7.74-7.78 (m, 2H), 7 : 42-7 . 48 (m, 3H), 6.76 (ddt, 1H, J = 6.4, 17.0, J_{HP} = 20.1 Hz), 5.80 (dd, 1H, J = 17.0, J_{HP} = 23.1 Hz), 4.17-4.20 (m, 1H), 0.79-2.22 (m, 31H). ¹³C NMR. (125.4 MHz, CDCl₃) δ 153.1, 133.3 (J_{CP} = 139.7 Hz), 131.7 (J_{CP} = 2.0 Hz), 131.1 (J_{CP} = 10.3 Hz), 128.2 (J_{CP} = 13.5 Hz), 121.2 (J_{CP} = 134.5 Hz), 76.5 (J_{CP} = 7.3 Hz), 48.8 (J_{CP} = 6.2 Hz), 43.7, 34.2 (J_{CP} = 18. 6 Hz), 34.2, 31.6 (J_{CP}= 4.2 Hz), 28.9, 27.8, 25.6, 22.9, 22.6, 21.9, 21.2, 15.8, 14.1. ³¹P NMR (201.9 MHz, CDCl₃) δ 28.8.

HRMS for C₂₄H₃₉O₂P, calculated: 390.2688, found: 390.2655

Elementary analysis, calculated: C, 73.81; H, 10.07. found: C, 73.94; H, 9.99

### Examples 2 to 14

Optically active phosphinic acid esters of the present invention were synthesized by the same means as in Example 1 using various acetylene compounds. The result is shown in Table 1.

**Table 1**

| Examples | Alkynes | Adducts* | Yield (%) |
|---|---|---|---|
| 2 | 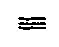 | 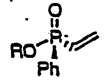 | 18 |
| 3 | 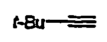 | 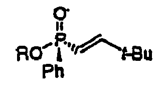 | 78 |
| 4 | 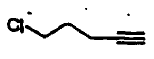 | 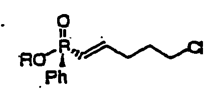 | 87 |
| 5 | 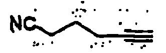 | 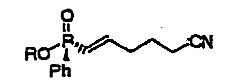 | 42 |
| 6 | 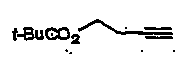 | 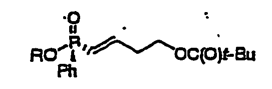 | 50 |
| 7 | 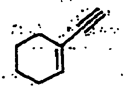 | 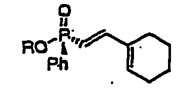 | 82 |
| 8 | 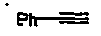 | 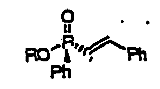 | 61 |
| 9 | 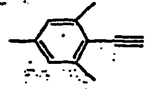 | 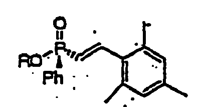 | 91 |
| 10 | 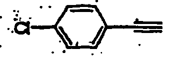 | 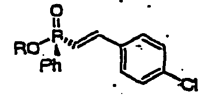 | 71 |
| 11 | 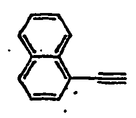 | 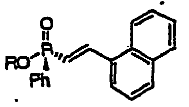 | 83 |
| 12 | 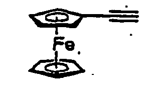 | 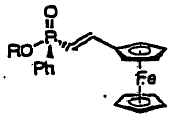 | 52 |
| 13 | 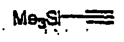 | 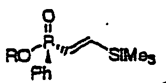 | 60 |
| 14 | 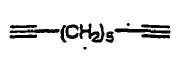 | 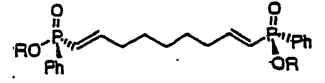 | 78 |

| | | | |
|---|---|---|---|
| * R= (-)-menthyl; chirality on phosphorus is R and optical purity is not lower than 99% ee. | | | |

Those products are novel substances which have not been mentioned in literatures and their spectral data and/or elementary analysis data are as follows.

### [Products of Example 2]

¹H NMR (500 MHz, CDCl₃) δ 7. 89-7 . 96 (m, 2H), 7. 07-7 .10 (m, 3H), 6.31 (ddd, 1H, J = 2.4, 18.6, J_{HP} = 22.5 Hz), 6.13 (ddd, 1H, J = 12.2, 18. 6, J_{Hp} = 22.8 Hz), 5.63 (ddd, 1H, J = 2.4, 12.2, J_{HP} 43.9 Hz), 4.34-4.45 (m, 1H), 2.35-2.38 (m, 1H), 2.18-2.23 (m, 1H), 0.64-1.48 (m, 29H).
¹³C NMR (125.4 MHz, CDCl₃) δ 134.2 (J_{CP} = 135.5 Hz), 133.7, 132.0 (J_{CP}= 130.3), 131.8 (J_{CP} = 3.1 Hz), 131.7 (J_{CP} =10.3 Hz), 128.5 (J_{CP} = 12.4 Hz), 76.5 (J_{CP} = 7.2 Hz), 49.2 (J_{CP} = 6.2 Hz), 44.0, 34.4, 31.6, 26.1, 23.2, 22.1, 21.3, 16.2. ³¹P NMR (201.9 MHz, CDCl₃) δ 26.1.

HRMS for C₁₉H₂₇O₂P, calculated: 306.1749, found: 306.1746

Elementary analysis, calculated: C, 70.56; H, 8.88. found: C 70.51; H; 8.80

### [Product of Example 3]

¹H NMR (500 MHz, CDCl₃) δ 7.73-7.77 (m, 2H), 7.40-7.49 (m, 3H), 6.80 (dd, 1H, J = 17.4, J_{HP} = 21 .0 Hz), 5. 69 (dd, 1H, 17.4, J_{HP} = 22.5 Hz), z.20 (m, 1H), 2.14-2.17 (m, 2H), 1.60-1.66 (m, 2H), 1.36-1.40 (m, 2H), 0.78-1.17 (m, 21H).
³¹P MMR (201.9 MHz, CDCl₃) δ 29.9.

HRMS for C₂₂H₃₅O₂P, calculated: 362.2375, found: 362.2321

Elementary analysis, calculated: C, 72.90; H, 9.73. found: C 72.65; H, 9.76

### [Product of Example 4]

¹H NMR (500 MHz, CDCl₃) δ 7.73-7.77 (m, 2H), 7.43-7.50 (m, 3H), 6.72 (ddt, 1H, J = 6. 7, 17.1, J_{Hp} = 19. 8 Hz), 5. 90 (dd, 1H, J = 17.1, J_{HP} = 22.2 Hz), 4.15-4.23 (m, 1H), 3.50 (t, 2H, J = 6.4 Hz), 2.36-2.40 (m, 2H), 2.07-2.16 (m, 2H), 1.87-1.93 (m, 2H), 1.35-1.40 (m, 2H), 1.08-1.15 (m, 2H), 0.79-1.00 (m, 12H).
¹³C NMR (125.4 MHz, CDCl₃) δ 150.4, 132.8 (J_{CP} = 139.6 Hz), 131.9 (J_{CP} = 3.1), 131.1 (J_{CP} = 9.4 Hz), 128.3 (J_{CP} = 12.4 Hz), 122 . 8 (J_{CP} = 133. 5), 76. 6, 48 .8 (J_{CP}= 6.2 Hz), 44. 0, 43.7, 34. 1, 31.5, 31.2 (J_{CP} = 18. 6 Hz), 30.6, 25.7, 22. 9, 21.9, 21.2, 15.8. ³¹P NMR (201.9 MHz, CDCl₃) δ 28.1.

HRMS for C₂₁H₃₂ClO₂P, calculated: 382.1828, found: 382.1764

Elementary analysis, calculated: C, 65.87; H, 8.42. found: C 65.72; H, 8.07

### [Product of Example 5]

¹H NMR (500 MHz, CDCl₃) δ 7.74-7.78 (m, 2H), 7.45-7.52 (m, 3H), 6. 68 (ddt, 1H, J = 6.7, 17.1, J_{HP} = 19.9 Hz), 5.93 (dd, 1H, J=17.1, J_{HP} = 22. 0 Hz), 4.16-4.22 (m, 1H), 0. 80-2. 39 (m, 24H).
¹³C NMR (125.4 MHz, CDCl₃) δ 149.0, 132.7 (J_{CP} = 139.7 Hz), 132.0, 131.0, 128.5, 123.8 (J_{CP} = 133.4 Hz), 119.0, 76. 8, 48.8, 43.6, 34.1, 32.7, 31.6, 25.7, 23.7, 22.9, 21.9, 21.2, 16.7, 15.9.
³¹P NMR (201.9 MHz, CDCl₃) δ 29.9.

HRMS for C₂₂H₃₂NO₂P, calculated: 373.2171, found: 373.2136

Elementary analysis, calculated: C, 70.75; H, 8.64. found: C 70.92; H, 8.59

### [Product of Example 6]

¹H NMR (500 MHz, CDCl₃) δ7.72-7.77 (m, 2H), 7.40-7.49 (m, 3H), 6. 66 (ddt, 1H, J = 6. 7, 17.1, J_{HP} = 19. 8 Hz), 5. 92 (dd, 1H, J=17.1, J_{Hp} = 21 .7 Hz), 4.09-4.25 (m, 3H), 2.01-2.53 (m, 1H), 0.79-1.64 (m, 28H).
¹³C NMR (125.4 MHz, CDCl₃) δ 178.35, 147.4, 132.7 (J_{CP} = 139.7 Hz), 131.9, 131.2, 128.3, 124.4 (J_{CP}=1344.5 Hz), 76.8, 62.1, 48.8, 43.6, 38.7, 34.1, 33.3, 31.5, 27.2, 25.6, 22.9, 21.9, 21.2, 15.8.
³¹p NMR (201.9 MHz, CDCl₃) δ 27.8.

HRMS for C₂₅H₃₉O₄P, calculated: 434.2586, found: 434.2583

Elementary analysis, calculated: C, 69.10; H, 9.05. found: C 69.45; H, 9.03

### [Product of Example 7]

¹H NMR (500 MHz, CDCl₃) δ7.75-7.79 (m, 2H), 7.41-7.48 (m, 3H), 7.12 (dd, 1H, J = 17.1, J_{HP} = 20.2 Hz), 6.09 (bs, 1H), 5.67 (dd, 1H, J = 17.1, J_{HP} = 21.4 Hz), 4.13-4.20 (m, 1H), 2.07-2.18 (m, 6H), 1.56-1.65 (m, 6H), 0.76-1.38 (m, 14H).
¹³C NMR (125.4 MHz, CDCl₃) δ 151.4, 137.9, 135.3, 133.5 (J_{CP} = 140.7 Hz), 131.6, 131.1, 128.3, 114.1 (J_{CP}= 136.6 Hz), 76.4, 48.9, 43.8, 34.2, 31.6, 26.3, 25.6, 23.9, 22.9, 22.1, 21.9, 21.2, 15.9.
³¹P NMR (201.9 MHz, CDCl₃) δ 30.5.

HRMS for C₂₄H₃₅O₂P, calculated: 386.2375, found: 386.2325

Elementary analysis, calculated: C, 74.58; H, 9.13. found: C 74.67; H, 9.06

### [Product of Example 8]

¹H NMR (500 MHz, CDCl₃) δ 7.81-7.86 (m, 2H), 7.55 (dd, J = 17.4, J_{HP}= 20.5 Hz), 7.34-7.52 (m, 8H), 6.43 (dd, 1H, J = 17.4, J_{HP} = 20.5 Hz), 4.23-4.29 (m, 1H), 2.20-2.23 (m, 2H), 0.78-1.43 (m, 16H).
¹³C NMR (125.4 MHz, CDCl₃) δ 147.8, 135.1, 132.9 (J_{CP} = 141.7 Hz), 131.9, 131.1, 130.0, 128.8, 128.4, 127.8, 118.5 (J_{CP} =135.5 Hz), 76.8, 48.9, 43.8, 34.1, 31.6, 25.7, 22.9, 21.9, 21.2, 15.8.
³¹P NMR (201.9 MHz, CDCl₃) δ 29.2.

HRMS for C₂₄H₃₁O₂P, calculated: 382.2062, found: 382.2051

Elementary analysis, calculated: C, 75.37; H, 8.17. found: C 75.67; H, 8.32

### [Product of Example 9]

¹H NMR (500 MHz, CDCl₃) δ7.82-7.87 (m, 2H), 7.58 (dd, 1H, J = 18.0, J_{HP} =21.7Hz), 7.44-7.53-(m, 3H), 6.85 (s, 2H), 6.08 (dd, 1H, J = 18.0, J_{HP}=22.9 Hz), 4.30-4.37 (m, 1H), 2.26 (s, 9H), 0.81-2.12 (m, 18H).
¹³C NMR (125.4 MHz, CDCl₃) δ 146.3, 137.9, 136.2, 133.4 (J_{CP} = 138.6 Hz), 132.4, 131.8, 131.2, 129.0, 128.4, 124.9 (J_{CP} = 132.4 Hz), 76.8, 48.8, 43.7, 34.2, 31. 6, 25. 9, 23.0, 21.9, 21.1, 21.0, 20.8, 15.9.
³¹P NMR (201.9 MHz, CDCl₃) δ 28.7.

HRMS for C₂₇H₃₇O₂P, calculated: 424.2531, found: 424.2531

Elementary analysis, calculated: 76.38; H, 8.78. found: C 76.11; H, 8.68

### [Product of Example 10]

¹HNMR (500 MHz, CDCl₃) δ7. 80-7. 85 (m, 2H), 7.32-7.52 (m, 8H), 6.40 (dd, 1H, J = 17.4, J_{HP} = 20.1 Hz),), 4.21-4 .29 (m, 1H), 0.77-2.20 (m, 18H).
¹³C NMR (125.4 MHz, CDCl₃) δ 146.2, 135.9, 133.5, 132.6 (J_{CP} = 141.7 Hz), 132.1, 131.1, 129.1, 128.9, 128.5, 119.5 (J_{CP} = 135.5Hz), 76.8, 48.9, 43.8, 34.1, 31.6, 25.7, 22.9, 21.9, 21.2, 15.8.
³¹P NMR (201.9 MHz, CDCl₃) δ 28.8.

HRMS for C₂₄H₃₀ClO₂P, calculated: 416.1672, found: 416.1762

Elementary analysis, calculated: C, 69.14; H, 7.25. found: C 68.94; H, 7.25

### [Product of Example 11]

¹H NMR (500 MHz, CDCl₃) δ 8.36 (dd, 1H, J = 17.1, J_{HP} = 20.1 Hz), 8.19-8.21 (m, 1H), 7.44-7.92 (m, 11H), 6.56 (dd, 1H, J = 17.1, J_{HP} = 21.7 Hz), 4.32-4.39 (m, 1H), 0.82-2.34 (m, 18H). ³¹P NMR (201.9 MHz, CDCl₃) δ 28.9.

HRMS for C₂₈H₃₃O₂P, calculated: 432.2218, found: 432.2216

Elementary analysis, calculated: C, 77.75; H, 7.69. found: C 77.55; H, 7.70

### [Product of Example 12]

¹HNMR (500 MHz, CDCl₃) δ8.05-8.11 (m, 2H), 7.77 (dd, 1H, J = 17.4, J_{HP} = 19. 8 Hz), 7.08-7.14 (m, 3H), 6.16 (dd, 1H, J = 17.4, J_{HP} = 21.7 Hz), 4 .49-4 .52 (m, 1H), 4.20 (bs, 1H), 4 .14 (bs, 1H), 4.01 (bs, 2H), 3.92 (s, 5H), 2.44-2.54 (m, 2H), 0.62-1.53 (m, 16H).
¹³C NMR (125.4 MHz, CDCl₃) δ 148.1, 135.5 (J_{CP} = 138.6 Hz), 131.6, 131.5, 128.5, 116. 6 (J_{CP} =138.6 Hz), 80.5, 76.3, 70.7, 70.6, 69.8, 69.1, 67.9, 49.4, 44.2, 34.5, 31.8, 26.2, 23.3, 22.1, 21.4, 16.4.
³¹P NMR (201.9 MHz, CDCl₃) δ 26.9.

HRMS for C₂₉H₃₅FeO₂P, calculated: 490.1724, found: 490.1730

Elementary analysis, calculated: C, 68.58; H, 7.19. found: C 68.21; H, 7.20

### [Product of Example 13) .

¹H NMR (500 MHz, CDCl₃) δ7.75-7.79 (m, 2H.), 7.42-7.53 (m, 3H), 7.20 (dd, 1H, J= 20.5, J_{HP}= 31.1 Hz), 6.44 (dd, 1H, J = 20.5, J_{HP}=29.6 Hz), 4.17-4.19 (m, 1H), 2.12-2.18 (m, 2H), 0.79-1.67 (m, 16H), 0.09 (s, 9H).
¹³C NMR (125:4 MHz, CDCl₃)δ 154.8, 136.5 (J_{CP} =121.0 Hz), 132.5 (J_{CP} = 136.6 Hz), 131.9, 131.2, 128.3, 76.7849.8, 43.8, 34.1, 31.6, 25.6, 22.9, 21.9, 21.2, 15.9, -1.9.
³¹P NMR (201.9 MHz, CDCl₃) δ 27.3.

HRMS for C₂₁H₃₅O₂PSi, calculated: 378.2144, found: 378.2090 Elementary analysis, calculated: C, 66.63; H, 9.32. found: C 66.64; H, 9.29

### [Product of Example 14]

¹H NMR (500 MHz, CDCl₃) δ7.73-7.77 (m, 4H), 7.41-7.49 (m, 6H), 6.74 (ddt, 2H, J = 6.4, 17.1, J_{HP} = 20.1 Hz), 5.80 (dd, 2H, J = 17.1, J_{HP} = 23.2 Hz), 4.14-4.21 (m, 2H), 0.76-2.20 (m, 46H).
¹³C NMR (125.4 MHz, CDCl₃) δ 152.4, 133.1 (J_{CP} = 138.6 Hz), 131.8, 131.1, 128.3, 121.5 (J_{CP}= 134.5 Hz), 76.8, 48.8, 43.7, 34.1, 34.0, 31.6, 28.7, 27.6, 25.6, 22.9, 21.9, 21.2, 15.9. ³¹P NMR (201.9 MHz, CDCl₃) δ 27.3.

Elementary analysis for C₄₁H₆₂O₄P₂, calculated: C, 72.32 H, 9.18. found: C 71.96; H, 9.16

### Example 15

To 2 ml of benzene were added 1 mmol menthyl (R)ₚ-phenylphosphinate (98.5% ee), 1 mmol of 1-octyne and 5 molar % of Me₂Pd(PPh₃)₂ as a catalyst and the mixture was made to react at 70°C for 4 hours in a nitrogen atmosphere to give menthyl (R)ₚ-phenyl [(E) -1-octen-1yl]phosphinate in 21% yield. Its optical purity was 97.3% ee.

This compound is a novel substance which has not been mentioned in the literature yet and its spectral data are as follows.
¹H NMR (500.MHz, CDCl₃) δ 7.74-7.81 (m, 2H), 7.40-7.50 (m, 3H), 5. 91 (dd, 1H, J = 1 .5, J_{HP} = 21. 3 Hz), 5.71 (dd, 1H, J = 1.5, J_{HP} = 44.1 Hz), 4.28-4.31 (m, 1H), 0.75-2.25 (m, 31H) . ¹³C NMR (125.4 MHz, CDCl₃) δ 143.7 (J_{CP} = 124.0 Hz), 132.7 (J_{CP} = 130.2 Hz), 131.8 (J_{CP} = 10.0 Hz), 131.8, 128.2 (J_{CP} = 12.7 Hz), 127.1 (J_{CP}= 9.2 Hz), 76.5 (J_{CP} = 7.2 Hz), 48.9 (J_{CP} = 7.0 Hz), 43.4, 34.1, 31. 6, 31.-5, 31.2 (J_{CP} =11.5 Hz), 28.9, 27.9 (J_{CP}= 6. 0 Hz), 25. 6, 22 . 7, 22 . 5, 21.9, 21.2, 15.6, 14. 0.
³¹p NMR (201.9 MHz, CDCl₃) δ 30.9.

HRMS for C₂₄H₃₉O₂P, calculated: 390.2688, found: 390.2708

Elementary analysis, calculated: C, 73.81; H, 10.07. found: C 73.70; H, 10.08

### Examples 16 to 20

Results of the reactions carried out under the same condition as in Example 15 using various palladium catalysts are shown in Table 2.

**Table 2**

| Examples | Catalysts | Yields (%)* |
|---|---|---|
| 16 | Me₂Pd(PPh₂Me)₂ | 41 |
| 17 | Me₂Pd(PPhMe₂)₂ | 53 |
| 18 | Me₂Pd(PEt₃)₂ | 5 |
| 19 | Me₂Pd(PMe₃)₂ | 3 |
| 20 | Pd(PPh₃)₄ | 8 |

| | | |
|---|---|---|
| ^{*}: Optical purity of the product is not lower than 97% ee. | | |

### Example 21

To 2 ml of toluene were added 1 mmol menthyl (R)ₚ-phenylphosphinate (99% ee), 1 mmol of 1-octyne, 5 mol % of Me₂Pd (PPhMe₂) ₂ as a catalyst and 10 mol % of diphenylohosphinic acid and the mixture was made to react at 70°C for 4 hours in a nitrogen atmosphere to give menthyl (R)ₚ-phenyl[(E)-1-octen-2yl]phosphinate in 96% yield. Its optical purity was 99% ee

### Examples 22 to 25

Results of the reaction carried out under the same condition as in Example 21 using various phosphinic acids are shown in Table 3'.

**Table 3**

| Examples | Phosphinic Acids | Yields (%) * |
|---|---|---|
| 22 | Me₂PO₂H | 95(88/12). |
| 23 | t-BuPhPO₂H | 91(88/12) |
| 24 | (MeC₆H₄)₂PO₂H | 87(90/10) |
| 25 | (CF₃C₆H₄)₂PO₂H | 60(97/3) |

| | | |
|---|---|---|
| * : Numerals in the parentheses show the ratio of an octen-2-yl isomer to an octen-1-yl isomer. Optical purity of the product is not lower than 98% ee. | | |

### Examples 26 to 40

Optically active phosphinic acid esters were synthesized by the same means as in Example 21 using various acetylene compounds. The results are shown in Table 4.

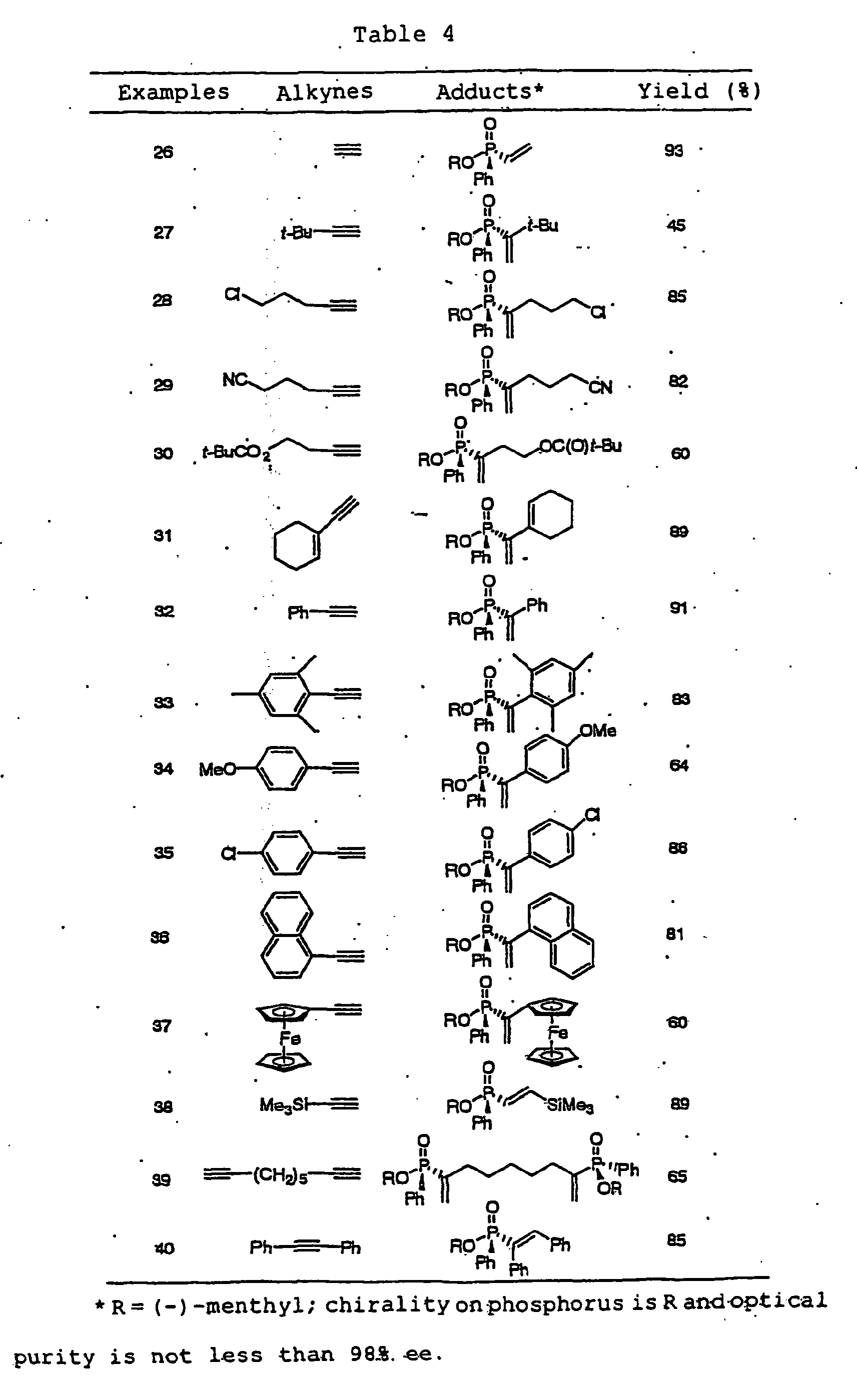

Among the above products, those of Examples 26 and 38 are the same compounds as those already mentioned Examples 2 and 13, respectively. Other products are novel substances which have not been mentioned in literatures yet and their spectral data and/or elementary analyses are as shown below.

### [Product of Example 27]

¹H NMR (500 MHz, CDCl₃) δ7.76-7.80 (m, 2H), 7 .39-7. 47 (m, 3H), 5.96 (d, 1H, J_{HP} = 20 .4 Hz), 5. 87 (d, 1H, J_{HP} = 42 . 3 Hz), 4.20-4.26 (m, 1H), 0.74-2.27 (m, 27H).
¹³C NMR (125.4 MHz, CDCl₃) δ 152.3 (J_{CP} = 119.0 Hz), 135.3 (J_{CP} = 128.3), 131.5 (J_{CP} = 10.4 Hz), 131.3, 128.1 (J_{CP} = 12.4 Hz), 126.6 (J_{CP} = 7.2 Hz), 76.9 (J_{CP} = 7.5 Hz), 49.1 (J_{CP} = 6.2 Hz), 43.3, 36.6, 34.1, 31.5, 30.3, 25.6, 22.8, 22.0, 21.2, 15.7.
³¹P NMR (201.9 MHz, CDCl₃) δ 30.0.

HRMS for C₂₂H₃₅O₂P, calculated: 362.2375, found: 362.2451

Elementary analysis, calculated: C, 72.90; H, 9.73. found: C 73.18; H, 9.90

### [Product of Example 28]

¹H NMR (500 MHz, CDCl₃) δ7.75-7.79 (m, 2H), 7.40-7.52 (m, 3H), 5.92 (d, 1H, J_{HP} = 20.7 Hz), 5.74 (d, 1H, J_{HP}=43.5 Hz), 4.20-4.26 (m, 1H), 3.42-3.47 (m, 2H), 2.17-2.40 (m, 3H), 1.84-1.92 (m, 3H), 1.59-1.66 (m, 2H), 1.31-1.43 (m, 2H), 0.75-1.07 (m, 12H).
¹³C NMR (125.4 MHz, CDCl₃) δ 142.2 (J_{CP} = 125.2 Hz), 132.0 (J_{CP} = 128.2), 132.0, 131.8 (J_{CP} = 10.4 Hz), 128.3 (J_{CP} = 9.3 Hz), 77.1, 48.9 (J_{CP} = 6.2 Hz), 44.2, 43.4, 34.1, 31.5, 30.9 (J_{CP} = 5.1 Hz), 28.9 (J_{CP} = 12.4 Hz), 25.7, 22.8, 22.0, 21.2, 15.6.
³¹P NMR (201.9 MHz, CDCl₃) δ30.4. [0078]

HRMS for C₂₁H₃₂ClO₂P, calculated: 382.1828, found: 382.1792

Elementary analysis, calculated: C, 65.87; H, 8.42. found: C 65.68; H, 8.22

### [Product of Example 29]

¹H NMR (500 MHz, CDCl₃) δ7.74-7.78 (m, 2H), 7.42-7.52 (m, 3H), 5.90 (d, 1H, J_{HP}=20.4 Hz), 5.74 (d, 1H, J_{HP} = 42.6 Hz), 4.15-4.31 (m, 1H), 0.73-2.28 (m, 24H).
¹³C NMR (125.4 MHz, CDCl₃) δ 141.6 (J_{CP} = 126.2 Hz), 132.0 (J_{CP} =131.4), 132.0, 131.5, 128.9, 128.5, 119.2, 76.9, 48.9, 43.3, 34.0, 31.5, 30.9, 25.8, 24.0, 22.8, 21.9, 21.2, 16.6, 15.6.
³¹P NMR (201.9 MHz, CDCl₃) δ29.9.

HRMS for C₂₂H₃₂NO₂P, calculated: 373.2171, found: 373.2110

Elementary analysis, calculated: C, 70.75; H, 8.64; N, 3.75. found: C 70.81; H, 8.66; N, 3.72

### [Product of Example 30]

¹H NMR (500 MHz, CDCl₃) δ7.74-7.79 (m, 2H), 7.43-7.52 (m, 3H), 5. 97 (d, 1H, J_{HP}=21.1 Hz), 5.78 (d, 1H, J_{HP} = 43. 0 Hz), 4.27-4.33 (m, 1H), 4.05-4.13 (m, 2H), 0.74-2. 62 (m, 29H) .
¹³C NMR (125.4 MHz, CDCl₃) δ178.3, 139.7 (J_{CP} = 127.2 Hz), 132.2 (J_{CP} = 131.3), 132.0, 131.8, 129.3, 128.4, 77.2, 62.1, 48.9, 43.4, 38.7, 34.1, 31.5, 30.6, 27.2, 25.7, 22.8, 21.9, 21.2, 15.6.
³¹P NMR (201.9 MHz, CDCl₃) δ30.0.

HRMS for C₂₅H₃₉O₄P, calculated: 434.2586, found: 434.2582

Elementary analysis, calculated: C, 69.10; H, 9.05. found: C 68.83; H, 8.93

### [Product of Example 31]

¹H NMR (500 MHz, CDCl₃) δ7.71-7.78 (m, 2H), 7.37-7.46 (m, 3H), 6.18 (bs, 1H), 5.92 (d, 1H, J_{HP} = 20.6 Hz), 5.85 (d, 1H, J_{HP} = 42.2 Hz), 4.30-4.34 (m, 1H), 0.75-2.24 (m, 26H).
¹³C NMR (125.4 MHz, CDCl₃) δ163.5, 143.6 (J_{CP} = 123.7 Hz), 133.8 (J_{CP} = 124.9 Hz), 132.8, 131.6, 131.4, 130.4, 128.1, 126.1, 76.6, 48.8, 43.4, 34.1, 31.5, 29.6, 26.9, 25.5, 22.7, 22.6, 21.9, 21.7, 21.2, 15.6.
³¹P NMR (201.9 MHz, CDCl₃) δ30.4.

HRMS for C₂₄H₃₅O₂P, calculated: 386.2375, found: 386.2372

Elementary analysis, calculated: C, 74.58; H, 9.13. found: C 74.52; H, 9.10

### [Product of Example 32]

¹H NMR (500 MHz, CDCl₃) δ 7. 72-7 .77 (m, 2H), 7 .24-7. 43 (m, 8H), 6.07 (dd, 1H, J = 1.5; J_{HP} = 20.1 Hz), 6.03 (dd, 1H, J = 1.5, J_{HP} = 41.8 Hz), 4.29-4.38 (m, 1H), 0.67-1.93 (m, 18H). ¹³C NMR (125.4 MHz, CDCl₃) δ 144.3 (J_{CP} = 126.9 Hz), 137.5, 132.5 (J_{CP} = 133.3 Hz), 131.8, 131.9, 130.3, 128.3, 128.1, 128.0, 127.9, 76.6, 48.8, 43.3, 34.1, 31.5, 25.4, 22.7, 21.9, 21.1, 15.5.
³¹P NMR (201.9 MHz, CDCl₃) δ29.2.

HRMS for C₂₄H₃₅O₂P, calculated: 382.2062, found: 382.2036

Elementary analysis, calculated: C, 75.37; H, 8.17. found: C 75.01; H, 8.12

### [Product of Example 33]

¹H NMR (500 MHz, CDCl₃) δ7.76-7.80 (m, 2H), 7.39-7.53 (m, 3H), 6.84 (s, 1H), 6.79 (s, 1H), 5.93 (dd, 1H, J = 1.9, J_{HP} = 22.0 Hz), 5.70 (dd, 1H, J = 1.9, J_{HP} = 46.7 Hz), 4.23-4.30 (m, 1H), 2.04 (s, 3H), 2.25 (s, 3H), 2.26 (s, 3H), 0.59-1.55 (m, 18H).
¹³C NMR (125.4 MHz, CDCl₃) δ 145.3 (J_{CP} = 128.3 Hz), 136.8,
136.7, 133.9, 132.7 (J_{CP} = 127.2 Hz), 132.6, 132.0, 131.9, 128.1, 127.9, 76.4, 49.0, 43.0, 34.1, 31.4, 24.8, 22.5, 21.9, 21.2, 21.0; 20.6, 20.5, 15.2.
³¹P NMR (201.9 MHz, CDCl₃) δ29.4.

HRMS for C₂₇H₃₇O₂P, calculated: 424.2531, found: 424.2534 Elementary analysis, calculated: C, 76.38; H, 8.78. found: C 76.21; H, 8.75

### [Product of Example 34]

¹H NMR (500 MHz, CDCl₃) δ 7.72-7.76 (m, 2H), 7.37-7.46 (m, 4H), 6.77-6.80 (m, 2H), 6.02 (dd, 1H, J = 1.5, J_{HP} = 20.5 Hz), 5.98 (dd, 1H, J = 1.5, J_{HP} = 41.5 Hz), 4.30-4.36 (m, 1H), 3.76 (s, 3H),0.68-1.96 (m, 19H).
¹³C NMR (125.4 MHz, CDCl₃) δ159.5, 142.3 (J_{CP} = 127.2 Hz),
132.7 (J_{CP} = 133.5 Hz), 131.9, 131.8, 129.8, 129.2, 129.1, 128.2, 113.6, 76.8, 55.2, 48.9, 43.4, 34.1, 31.5, 25.4, 22.8, 21.9, 21.2, 15.6.
³¹P NMR (201.9 MHz, CDCl₃) δ 29.4.

HRMS for C₂₅H₃₃O₃P, calculated: 412.2167, found: 412.2169 Elementary analysis, calculated: C, 72.79; H, 8.06. found: C 72.90; H, 8.10

### [Product of Example 35]

¹H NMR (500 MHz, CDCl₃) δ 7.71-7.84 (m, 2H), 7.19-7.52 (m, 7H), 6.03 (dd, 1H, J = 1.2, J_{HP} = 20.2 Hz), 5.98 (dd, 1H, J = 1.2, J_{HP} = 41.5 Hz), 4.29-4.36 (m, 1H), 0.67-1.89 (m, 18H). ¹³C NMR (125.4 MHz, CDCl₃) δ143.3 (J_{CP} = 128.3 Hz), 136.0,
134.1, 132.2 (J_{CP} = 133.5 Hz), 132.1, 131.9, 130.6, 129.4, 128.5, 128.2, 76.8, 48.8, 43.3, 34.1, 31.5, 25.4, 22.8, 21.9, 21.1, 15.6.
³¹P NMR (201.9 MHz, CDCl₃) δ28.9. [0086]

HRMS for C₂₄H₃₀ClO₂P, calculated: 416.1672, found: 416.1676

Elementary analysis, calculated: C, 69.14; H, 7.25. found: C 69.05; H, 7.40

### [Product of Example 36]

¹H NMR (500 MHz, CDCl₃) δ 7.72-7.89 (m, 5H), 7.33-7.47 (m, 7H), 6.24 (dd, 1H, J = 1.9, J_{HP} =21.4 Hz), 5.92 (dd, 1H, J = 1.9, J_{HP} = 44 .3 Hz), 4.21-4.27 (m, 1H), 0.45-1.82 (m, 18H) .
³¹P NMR (201.9 MHz, CDCl₃) δ28.6.

HRMS for C₂₈H₃₃O₂P, calculated: 432.2218, found: 432.2215

Elementary analysis, calculated: C, 77.75; H, 7.69. found: C 77.68; H, 7.85

### [Product of Example 37]

¹H NMR (500 MHz, CDCl₃) δ7.84-7.88 (m, 2H), 7.46-7.51 (m, 3H), 6.24 (d, 1H, J_{HP} = 39.3 Hz), 6.23 (d, 1H, J_{HP} = 20.5 Hz), 4. 62 (bs, 1H), 4.28 (bs, 1H), 4.18 (bs, 1H), 4.13 (bs, 1H), 4.10-4.29 (m, 1H), 3.90 (s, 5H), 0.72-2.13 (m, 18H).
¹³C NMR (125.4 MHz, CDCl₃) δ 141.2 (J_{CP} = 128.3 Hz), 133.8 (J_{CP} = 132.4 Hz), 131.9, 131.6, 128.2, 126.2, 80.8, 77.1, 69.8, 68.7, 68.6, 68.2, 68.0, 48.9, 43.5, 34.1, 31.6, 25.5, 22.8, 22.0, 21.2, 15.7.
³¹P NMR (201.9 MHz, CDCl₃) δ26.9.

HRMS for C₂₉H₃₅FeO₂P, calculated: 490.1724, found: 490.1722

Elementary analysis, calculated: C, 68.58; H, 7.19. found: C 68.82; H, 7.31

### [Product of Example 39]

¹H NMR (500 MHz, CDCl₃) δ 7.73-7.77 (m, 4H), 7.39-7.49 (m, 6H), 5.90 (d, 2H, J_{HP} = 21.3 Hz), 5. 65 (d, 2H, J_{HP} = 43.9 Hz), 4.24-4.31 (m, 2H), 0.75-2.19 (m, 46H).
¹³C NMR (125.4 MHz, CDCl₃) δ143 .4 (J_{CP} = 124.1 Hz), 132.5 (J_{CP} = 130.3 Hz), 131.9, 131.7, 128.1, 127.1, 76.9, 48.9, 43.5, 34.1, 31.5, 31.2, 31.1, 28.8, 27.7, 25.5, 22.8, 21.9, 21.2, 15.7.
³¹P NMR (201.9 MHz, CDCl₃) δ26.9.

Elementary analysis for C₄₁H₆₂O₄P₂, calculated: C, 72.32; H, 9.18. found: C 72.10; H, 9.27

### [Product of Example 40]

¹H NMR (500 MHz, CDCl₃) δ 7 . 95 (d, 1H, J_{HP} = 22.3 Hz), 7.85-7.92 (m, 2H), 7.24-7.28 (m, 2H), 6.99-7.13 (m, 8H), 6.78-6.84 (m, 3H), 4.62-4.68 (m, 1H), 2.49-2.50 (m, 1H), 1.88-2.00 (m, 1H), 0.56-1.49 (m, 16H).
¹³C NMR (125.4 MHz, CDCl₃) δ 143.4 (J_{CP} = 124.1 Hz), 132.5 (J_{CP} =130.3Hz), 131.9, 131.7, 128.1, 127.1, 76.9, 48.9, 43.5, 34.1, 31.5, 31.2, 31.1, 28.8, 27.7, 25.5, 22.8, 21.9, 21.2, 15.7.
³¹P NMR (201.9 MHz, CDCl₃) δ 27.7.

HRMS for C₃₀H₃₅O₂P, calculated: 458.2375, found: 458.2371

Elementary analysis, calculated: C, 78.57; H, 7.69. found: C 78.41; H, 7.41

### Industrial Applicability

The optically active alkenylphosphinic acid esters having chirality on phosphorus in accordance with the present invention are novel compounds which have not been mentioned in literatures yet and are useful as intermediates for the synthesis of physiologically active substances such as drugs and agricultural chemicals and of ligands used in the preparation of catalysts, etc. Moreover, the method for the synthesis of optically active alkenylphosphinic acid esters according to the present invention is able to be carried out easily, safely and efficiently only by the reaction of acetylenes with optically active hydrogen phosphinic acid esters and separation and purification of the product are easy as well. Consequently, the present invention results in a great effect in an industrial view.

## Claims

1. A process for the production of an optically active alkenylphosphinic acid ester compound represented by the formula [1]
R¹ { CH=CR² [P(O)(OR³) Ar]},ₙ [1]
and/or the formula [2]
R¹ {C [P (O) (OR³)Ar]=CHR²}ₙ [2]
(in the above formulae, R¹, R², R³ and Ar have the same meanings which will be defined below) where phosphorus atom in any of the configurations of R and S is predominantly contained, **characterized in that**, an acetylene compound represented by the formula [3]
R¹ (C≡CR²)ₙ [3]
(in the formula, n is 1 or 2; R¹ and R² each when n is 1 and R² when n is 2 is hydrogen atom, an alkyl group, a cycloalkyl group, an aryl group, an aralkyl group, a heteroaryl group, a ferrocenyl group, an alkenyl group, an alkoxy group, an aryloxy group, a silyl group or a silyloxy group; and R¹ when n is 2 is an alkylene group, a cycloalkylene group, an arylene group, an aralkylene group, a heteroarylene group, a ferrocenylene group, an alkenylene group, a silylene group, an alkylenedioxy group, an arylenedioxy group or a silylenedioxy group) is made to react, in the presence of a catalyst containing a metal of group 9 or group 10 of the periodic table, with an optically active hydrogen phosphinic acid ester represented by the formula [4]
HP(O) (OR³)Ar [4]
(in the formula, R³ is an alkyl group, a cycloalkyl group, an aralkyl group or an aryl group; and Ar is an aryl group or a heteroaryl group) where phosphorus atom in any of the configurations of R and S is predominantly contained.

2. The process according to claim 1 wherein R³ is (-)-menthyl.

3. The process according to either claim 1 or claim 2, wherein the metal of the group 9 is rhodium.

4. The process according to either claim 1 or claim 2, wherein the metal of the group 10 is palladium.

5. The process according to any of claims 1 to 4, wherein the catalyst containing the metal of the group 9 or group 10 of the periodic table is a complex catalyst of low valence state.

6. The process according to any of claims 1 to 4, wherein the catalyst containing the metal of the group 9 or group 10 of the periodic table is a complex of low valence state where tertiary phosphine or tertiary phosphite is a ligand.

7. The process according to any of claims 1 to 4, wherein the catalyst containing the metal of the group 9 or group 10 of the periodic table is a precursor complex which is easily able to be converted to a low valent complex in-situ.

8. The process according to any of claims 1 to 4, wherein the catalyst containing the metal of the group 9 or group 10 of the periodic table is a low valent complex in which ligand (s) is/are tertiary phosphine or/and tertiary phosphite which is/are formed in-situ by the joint use of the complex of the metal containing no tertiary phosphine or tertiary phosphite with tertiary phosphine or tertiary phosphite.

9. The process according to any of claims 1 to 8, wherein the reaction is carried out in the presence of a phosphinic acid represented by the formula [5]
HO-P(O) (R⁴)₂ [5]
(in the formula, R⁴ is an alkyl group, a cycloalkyl group or an aryl group).

## Patentansprüche

1. Verfahren für die Herstellung einer optisch aktiven Alkenylphosphinsäureester-Verbindung, dargestellt durch die Formel [1]
R¹ { CH=CR² [P(O) (OR³)Ar]}ₙ [1]
und/oder die Formel [2]
R¹ {C [P (O) (OR³) Ar]=CHR²}ₙ [2]
(in den obigen Formeln weisen R¹, R², R³ und Ar dieselben Bedeutungen auf, die nachstehend definiert werden), worin vorwiegend Phosphoratom in einer der Konfigurationen von R und S enthalten ist, **dadurch gekennzeichnet, dass** eine Acetylenverbindung, dargestellt durch die Formel [3]
R¹ (C≡CR²)ₙ [3]
(in der Formel ist n 1 oder 2; sind jeweils R¹ und R², wenn n 1 ist, bzw. R², wenn n 2 ist, Wasserstoffatom, eine Alkylgruppe, eine Cycloalkylgruppe, eine Arylgruppe, eine Aralkylgruppe, eine Heteroarylgruppe, eine Ferrocenylgruppe, eine Alkenylgruppe, eine Alkoxygruppe, eine Aryloxygruppe, eine Silylgruppe oder eine Silyloxygruppe; und R¹, wenn n 2 ist, eine Alkylengruppe, eine Cycloalkylengruppe, eine Arylengruppe, eine Aralkylengruppe, eine Heteroarylengruppe, eine Ferrocenylengruppe, eine Alkenylengruppe, eine Silylengruppe, eine Alkylendioxygruppe, eine Arylendioxygruppe oder eine Silylendioxygruppe) zum Reagieren gebracht wird, in Gegenwart eines Katalysators, der ein Metall der Gruppe 9 oder Gruppe 10 des periodischen Systems enthält, mit einem optisch aktiven Wasserstoff-Phosphinsäureester, darstellt durch die Formel [4]
HP (O) (OR³) Ar [4]
(in der Formel ist R³ eine Alkylgruppe, eine Cycloalkylgruppe, eine Aralkylgruppe oder eine Arylgruppe; und Ar ist eine Arylgruppe oder eine Heteroarylgruppe), worin vorwiegend Phosphoratom in einer der Konfigurationen von R und S enthalten ist.

2. Verfahren nach Anspruch 1, wobei R² (-)-Menthyl ist.

3. Verfahren entweder nach Anspruch 1 oder Anspruch 2, wobei das Metall der Gruppe 9 Rhodium ist.

4. Verfahren entweder nach Anspruch 1 oder Anspruch 2, wobei das Metall der Gruppe 10 Palladium ist.

5. Verfahren nach einem der Ansprüche 1 bis 4, wobei der Katalysator, der das Metall der Gruppe 9 oder Gruppe 10 des periodischen Systems enthält, ein Komplexkatalysator von geringem Valenzzustand ist.

6. Verfahren nach einem der Ansprüche 1 bis 4, wobei der Katalysator, der das Metall der Gruppe 9 oder Gruppe 10 des periodischen Systems enthält, ein Komplex von geringem Valenzzustand ist, bei dem tertiäres Phosphin oder tertiäres Phosphit ein Ligand ist.

7. Verfahren nach einem der Ansprüche 1 bis 4, wobei der Katalysator, der das Metall der Gruppe 9 oder Gruppe 10 des periodischen Systems enthält, ein Vorläuferkomplex ist, der leicht zu einem gering valenten Komplex in situ umwandelbar ist.

8. Verfahren nach einem der Ansprüche 1 bis 4, wobei der Katalysator, der das Metall der Gruppe 9 oder Gruppe 10 des periodischen Systems enthält, ein gering valenter Komplex ist, in welchem Ligand(en) tertiäres Phosphin und/oder tertiäres Phosphit ist/sind, welche(r) durch die gemeinsame Verwendung des Komplexes aus dem Metall, das kein tertiäres Phosphin oder tertiäres Phosphit enthält, mit tertiärem Phosphin oder tertiärem Phosphit in situ gebildet wird/werden.

9. Verfahren nach einem der Ansprüche 1 bis 8, worin die Reaktion in Gegenwart einer Phosphinsäure, darstellt durch die Formel [5]
HO-P (O) (R⁴)₂ [5]
(in der Formel ist R⁴ eine Alkylgruppe, eine Cycloalkylgruppe oder eine Arylgruppe), vorgenommen wird.

## Revendications

1. Procédé pour la fabrication d'un composé ester d'acide alcénylphosphinique optiquement actif représenté par la formule [1]
R¹ {CH=CR²[P (O) (OR³) Ar]} ₙ [1]
et/ou la formule [2]
R¹{C [P (O) (OR³)Ar]=CHR²}ₙ [2]
(dans les formules ci-dessus, R¹, R², R³ et Ar ont les mêmes significations que celles définies ci-après) où l'atome de phosphore dans l'une quelconque des configurations R et S est contenu de façon prédominante, **caractérisé en ce qu'**un composé acétylénique représenté par la formule [3]
R¹(C=CR²)ₙ [3]
(dans la formule, n est 1 ou 2 ; R¹ et R² chacun lorsque n est 1 et R² lorsque n est 2 est un atome d'hydrogène, un groupe alkyle, un groupe cycloalkyle, un groupe aryle, un groupe aralkyle, un groupe hétéroaryle, un groupe ferrocényle, un groupe alcényle, un groupe alcoxy, un groupe aryloxy, un groupe silyle ou un groupe silyloxy ; et R¹ lorsque n est 2 est un groupe alkylène, un groupe cycloalkylène, un groupe arylène, un groupe aralkylène, un groupe hétéroarylène, un groupe ferrocénylène, un groupe alcénylène, un groupe silylène, un groupe alkylènedioxy, un groupe arylènedioxy ou un groupe silylènedioxy) est mis à réagir, en présence d'un catalyseur contenant un métal du groupe 9 ou du groupe 10 du tableau périodique, avec un ester d'acide hydrogéno phosphinique optiquement actif représenté par la formule [4]
HP(O) (OR³)Ar [4]
(dans la formule, R³ est un groupe alkyle, un groupe cycloalkyle, un groupe aralkyle ou un groupe aryle ; et Ar est un groupe aryle ou un groupe hétéroaryle) où l'atome de phosphore de l'une quelconque des configurations R et S est contenu de façon prédominante.

2. Procédé selon la revendication 1, dans lequel R³ est (-)-menthyle.

3. Procédé selon soit la revendication 1 soit la revendication 2, dans lequel le métal du groupe 9 est le rhodium.

4. Procédé selon soit la revendication 1 soit la revendication 2, dans lequel le métal du groupe 10 est le palladium.

5. Procédé selon l'une quelconque des revendications 1 à 4, dans lequel le catalyseur contenant le métal du groupe 9 ou du groupe 10 du tableau périodique est un catalyseur sous forme d'un complexe d'état de valence bas.

6. Procédé selon l'une quelconque des revendications 1 à 4, dans lequel le catalyseur contenant le métal du groupe 9 ou du groupe 10 du tableau périodique est un complexe d'état de valence bas lorsqu'une phosphine tertiaire ou un phosphite tertiaire est un ligand.

7. Procédé selon l'une quelconque des revendications 1 à 4, dans lequel le catalyseur contenant le métal du groupe 9 ou du groupe 10 du tableau périodique est un complexe précurseur qui est aisément apte à être converti *in situ* en un complexe de valence basse.

8. Procédé selon l'une quelconque des revendications 1 à 4, dans lequel le catalyseur contenant le métal du groupe 9 ou du groupe 10 du tableau périodique est un complexe de valence basse dans lequel le(s) ligand(s) est/sont une phosphine tertiaire et/ou un phosphite tertiaire qui est/sont formé(s) *in situ* par l'utilisation conjointe du complexe du métal ne contenant pas de phosphine tertiaire ou de phosphite tertiaire avec une phosphine tertiaire ou un phosphite tertiaire.

9. Procédé selon l'une quelconque des revendications 1 à 8, dans lequel la réaction est effectuée en présence d'un acide phosphinique représenté par la formule [5]
HO-P (O) (R⁴) ₂ [5]
(dans la formule, R⁴ est un groupe alkyle, un groupe cycloalkyle ou un groupe aryle).
